# NEUE EUROPÄISCHE PATENTSCHRIFT

(11) **EP 0 399 320 B2**
(45) Veröffentlichungstag und Bekanntmachung des Hinweises auf die Entscheidung über den Einspruch: **19.01.2000**
(45) Hinweis auf die Patenterteilung: 20.12.1995
(21) Anmeldenummer: 90108992.0
(22) Anmeldetag: 12.05.1990
(51) Int. Cl.: C03C 13/00, C03C 3/078

(54) **Glasfasern mit erhöhter biologischer Verträglichkeit**
Glass fibers with increased biological compatibility
Fibres de verre à compatibilité biologique élevée

(30) Priorität: 25.05.1989 DE 3917045
(43) Veröffentlichungstag der Anmeldung: 28.11.1990
(73) Patentinhaber: Grünzweig + Hartmann AG, D-67059 Ludwigshafen (DE)
(72) Erfinder: Nyssen, Peter Roger, Dipl.-Ing., D-4047 Dormagen 11 (DE); Wagner, Wolfram, Dr., D-4047 Dormagen 1 (DE); Christoph, Geert, Dr., D-4047 Dormagen 1 (DE)
(74) Vertreter: Winter, Brandl, Fürniss, Hübner, Röss, Kaiser, Polte, Kindermann Partnerschaft

(56) Entgegenhaltungen:
- EP-A- 0 019 600
- EP-A- 0 091 866
- EP-A- 0 135 449
- WO-A-87/05007
- FR-A- 1 149 289
- US-A- 2 308 857
- CHEMICAL ABSTRACTS, vol. 98, no. 24, 13 Juni 1983, Columbus, Ohio, US, Seite 297; ref. no. 203276R
- Bayer Produktinformation, Juli 1987, "Bayer-Microglasfasern"

## Beschreibung

Seit dem Ende der fünfziger Jahre ist die krebserzeugende Wirkung von Asbest nachgewiesen. In jüngerer Zeit haben weitere Forschungsaktivitäten zu der Erkenntnis geführt, daS die Kanzerogenität nicht nur auf Asbest beschränkt ist, sondern daß grundsätzlich faserige Stäube, die in der Form von langgestreckten Partikeln vorliegen, krebserzeugende Wirkungsmechanismen in Gang setzen können, die sich nach dem heutigen Stand der Wissenschaft deutlich von der Kanzerogenese anderer chemischer Substanzen oder ionisierender Strahlung unterscheiden.

Aus Gründen des Gesundheits- und Arbeitsschutzes beim Umgang mit faserigen Stäuben gibt es seit den sechziger Jahren eine wissenschaftlich anerkannte Definition einer inhalierbaren Faser, die toxikologisch wirksam sein kann. Diese Definition bezieht sich auf eine unter dem Lichtmikroskop erkennbare Faser mit einem geometrischen Durchmesser von <3 µm, einer Länge >5 µm und einem Längen/Durchmesserverhältnis von mehr als 3:1. Für diese Definition liegen die Kenntnisse der krebserzeugenden Wirkung von Asbest zugrunde.

Künstliche Mineralfasern, wie Glasfasern, Basaltfasern, Schlackenfasern und Keramikfasern, die u.a. in Form von Kurzfasern hergestellt werden, können ebenfalls unter diese Definition fallen. Bei vielen technischen Anwendungen werden bevorzugt solche künstlichen Mineralfasern (KMF) eingesetzt, deren geometrischer Durchmesser noch deutlich kleiner ist als 3 µm, z.B. sogenannte Mikroglasfasern aus C- und E-Gläsern, die Faserdurchmesser zwischen 0,1 µm und 5 µm besitzen. Auch KMF für Isolationszwecke, die nach bekannten Verfahren wie z.B. Schleuderkorbverfahren, Schleuderradverfahren oder Blasverfahren hergestellt wurden, weisen Anteile von Fasern mit einer Feinheit von weniger als 3 µm, teilweise weniger als 1 µm, auf. Die hier erwähnten Fasern sind z.B. in [1] beschrieben. Solche Fasern sind für die verschiedensten Zwecke von großem technischen und wirtschaftlichen Interesse.

Im Umgang mit und bei der Herstellung von künstlichen Mineralfasern können Fasern in der Umgebungsluft im Mittel kürzer und dünner sein als in den Fertigprodukten. In [2] werden Transportmechanismen, Verteilungsform und Transformation von KMF-Stäuben dargestellt. Hier werden auch Angaben gemacht über die Exposition von lungengängigen Fasern bei der Herstellung und Verarbeitung von KMF. Weitere Informationen können auch aus [3] entnommen werden. Insgesamt liegen heute aufgrund der vielfältigen weltweiten wissenschaftlichen Untersuchungen über die krebserzeugende Wirkung von KMF detaillierte Erkenntnisse vor, In Betracht kommen u.a. tierexperimentelle Untersuchungen, wie Inhalationstests, intratracheale und intraperitoneale Experimente, sowie zellbiologische und andere in vitro-Studien. In zusammengefaßter Form werden solche Ergebnisse in [4] diskutiert. Die krebserzeugende Wirkung wird hier durch das Zusammenwirken der beiden folgenden Faktoren bestimmt:
1. durch die faserige Form, z.B. entsprechend der oben erwähnten Definition
2. durch die Persistenz (Verweildauer) in der Lunge.

Die aussagekräftigsten Ergebnisse im Vergleich zwischen natürlichen und künstlichen Mineralfasern ergeben sich bei Tierexperimenten mit intraperitonealer oder intrapleuraler Verabreichung der Stäube, da hierbei Spontan-Tumore induziert werden können. Gemäß [5] und [6] wird vom IARC eine Einteilung von künstlichen Mineralfasern in krebserzeugende bzw. nicht krebserzeugende vorgenommen. Hiernach können neben vielen Asbestarten künstliche Mineralfasern, wie dünne Glasfasern, Steinfasern und Keramikfasern krebserzeugend sein. Nicht krebserzeugend sind dicke Glasfasern und unbeständige Glasfasern. Die Beutändigkeit von KMF hängt wesentlich von ihrer chemischen Zusammensetzung ab. Die Verweildauer in der Lunge (Persistenz) hängt von der Zusammensetzung und der Größe der faserigen Stäube ab.

Die Persistenz wird umso großer sein, je höher die chemische Beständigkeit und je größer der geometrische Durchmesser der Faser ist.

In [4] werden Ergebnisse neuerer Intraperitoneal-Experimente dargestellt, in denen die krebserzeugende Wirkung verschiedener KMF, wie Basaltfasern und spezielle Mikroglasfasern eindeutig nachgewiesen ist. Überraschenderweise sind auch Glasfasern, deren mittlerer Faserdurchmesser sehr viel kleiner als 1 µm ist, sehr kanzerogen. Bekannt ist, daß solche Fasern aufgrund ihrer Glaszusammensetzungen eine hohe chemische Beständigkeit besitzen. Wichtige Anhaltspunkte bezüglich der Löslichkeit von KMF in vivo und in vitro gehen ferner aus [7] hervor. Die Bedeutung der chemischen Zusammensetzung für die Krebserzeugung wird in [8] untersucht, wonach Fasern, die intensiv mit einer Säure vorbehandelt wurden, keine tumorerzeugende Wirkung mehr besaßen im Vergleich zu unbehandelten Fasern.

Ferner werden in einem Firmenprospekt der Firma Bayer AG (Bayer Textilfaser Produktinformation, Stand 1987) Mikroglasfasern mit verschiedenen Glaszusammensetzungen und mit einem Durchmesser von 0,5 µm bis 3 µm, sowie einer mittleren Faserlänge von 1 - 10 mm für diverse Anwendungen angeboten. Bei sämtlichen angebotenen Glasfasertypen wird eine kanzerogene Wirksamkeit vermutet.

Es ist wissenschaftlich begründet, daß die krebserzeugende Wirkung von KMF in hohem Maße von der Fähigkeit des Abtransportes in der Lunge abhängt. Diese Fähigkeit wird im folgenden als "Lungenclearance" bezeichnet. Sie wird durch Tierversuche ermittelt. Die Lungenclearance wird durch zwei Faktoren bestimmt und zwar
1. durch die sogenannte Translokation, z. B. durch Makrophagen und
2. durch die Löslichkeit der Faser.

Bei Inhalationsexperimenten kommt möglicherweise noch eine alveoläre Clearance hinzu. Clearance-Untersuchungen bei Rattenlungen nach intratrachealer Instillation von Fasern werden in [9] beschrieben. Hierfür werden auch Halbwertszeiten der Lungenclearance für verschiedene Mineralfasern, insbesondere Glasfasern, angegeben.

Von diesem Kenntnisstand geht die Erfindung aus. Ziel der Erfindung war die gezielte Auswahl von toxikologisch unbedenklichen Glasfasern, d. h. Glasfasern, die kein kanzerogenes Potential zeigen.

Diese Aufgabe wird erfindungsgemäß durch die Verwendung von Glasfasern mit

der im Hauptanspruch angegebenen Glaszusammensetzung und Durchmessercharakterisierung gelöst. Nach intratrachealer Instillation von Glasfasern gemäß Anspruch 1 in Rattenlangen beträgt die Halbweitszeit 42 Tage und die nach einer Zeit von 2 fahren gemessene Tumorrate beträgt weniger als 5 %.

Bevorzugte Auswahlbereiche sind in den Unteransprüchen 2 - 3 angegeben.

Solche Glasfasern können daher unter dem Gesichtspunkt der Kanzerogenität toxikologisch unbedenklich verwendet werden.

Glasfasern dieser Zusammensetzung zeigen eine hervorragende Physiologische Löslichkeit. Es wurde gefunden, daß die physiologische Löslichkeit mit einer guten chemischen Löslichkeit in Säuren und Basen einhergeht.

Solche Glasfasern zeigen im Vergleich zu Asbest und Glasfasern mit einer von der erfindungsgemäßen Lehre abweichenden Zusammensetzung kein kanzerogenes Potential.

Bei den Glasfasern nach Anspruch 2 wurde gefunden, daß nach einer intratrachealen Instillation in Rattenlungen eine Abnahme der Faserzahl auf die Hälfte der Ursprungszahl innerhalb von weniger als 115 Tagen erfolgt und daß nach einer intratrachealen Instillation in Rattenlungen nach einer Zeit von 2 Jahren eine Tumorrate von weniger als 10 % vorliegt. Solche Glasfasern können daher als nicht kanzerogen eingestuft werden.

### Ausführungsbeispiele

### Beispiel 1 (nicht erfindungsgemäß)

Zur Untersuchung der physiologischen Verträglichkeit in vivo (Biobeständigkeit) wurden Glasfasern A und B mit den in Fig. 1 dargestellten Ausgangsdurchmesserverteilungen hergestellt. Zur Herstellung wurde das in EP-A 279 286 beschriebene Ziehdüsenverfahren verwendet. Die Durchmesserverteilungen wurden mit Hilfe eines Rasterelektronenmikroskops (REM) gemessen. Die beiden Fasertypen A, B unterschieden sich nur hinsichtlich ihres mittleren Durchmessers. Die chemische Zusammensetzung der Gläser war in beiden Fallen gleich:
SiO₂ = 60,7 %; B₂O₃ = 3,3 %; Na₂O = 15,4 %; Eisenoxide = 0,2 %; K₂O = 0,7 %; CaO = 16,5 %; MgO = 3,2 %. (Alle Angaben in Gewichtsprozent.)

Als Ausgangsmaterialien für die Glasherstellung werden üblicherweise Quarzsand, Borsäure, Dolomit, Kalk, Soda, Pottasche und gegebenenfalls andere übliche Rohstoffe wie z.B. Kryolith, Titandioxid und Natriumfluorid benutzt.

Mittels einer Messermühle oder einer Kugelmühle wurden die Faserproben dann zerkleinert und jeweils 1 mg der Proben in Wasser suspendiert, auf ein Filter aufgesaugt und im Rasterelektronenmikroskop bei 500 bis 1500-facher Vergrößerung untersucht. Eine Längen- und Dickenbestimmung der Einzelfaser erfolgte halbautomatisch anhand rasterelektronenmikroskopischer Bilder (REM) mittels Grafiktableau und rechnergestützter Datenerfassung. Aus den Längen- und Dickenverteilungen wurden Faservolumina und Faserzahlen pro Masseneinheit bestimmt. Besondere Aufmerksamkeit wurde dabei dem Faseranteil mit einer Länge größer als 5 µm, einem Durchmesser kleiner als 3 µm und einem Längen-Durchmesser-Verhältnis von größer als 3 als biologisch wirksame Fasern geschenkt. Die Untersuchungsergebnisse sind in der nachfolgenden Tabelle dargestellt.

| Probe | Faserlänge [µm] | | | Faserdurchmesser [µm] | | | Faseranteil % L >5 µm D <3 µm | Volumen [µm³ ] | Fasern/ng L >5 µm D <3 µm |
|---|---|---|---|---|---|---|---|---|---|
| | 10 %< | 50 %< | 90 %< | 10 %< | 50 %< | 90 %< | | | |
| A | 4,3 | 8,0 | 18,3 | 0,89 | 1,68 | 2,56 | 80,7 | 45 | 6,4 · 10⁶ |
| B | 1,6 | 4,6 | 14,0 | 0,26 | 0,48 | 0,88 | 46,9 | 3,2 | 58 · 10⁶ |

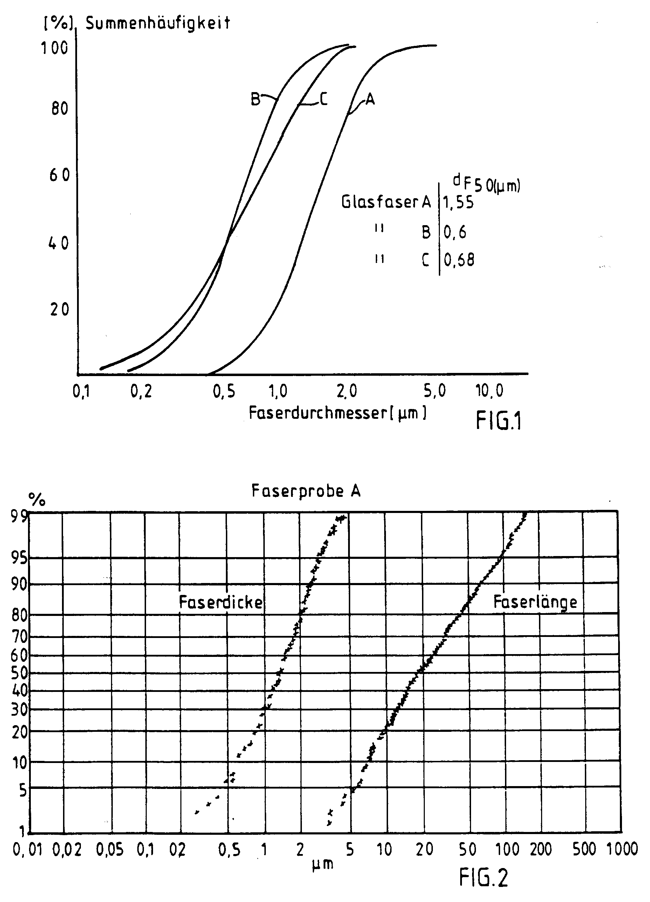

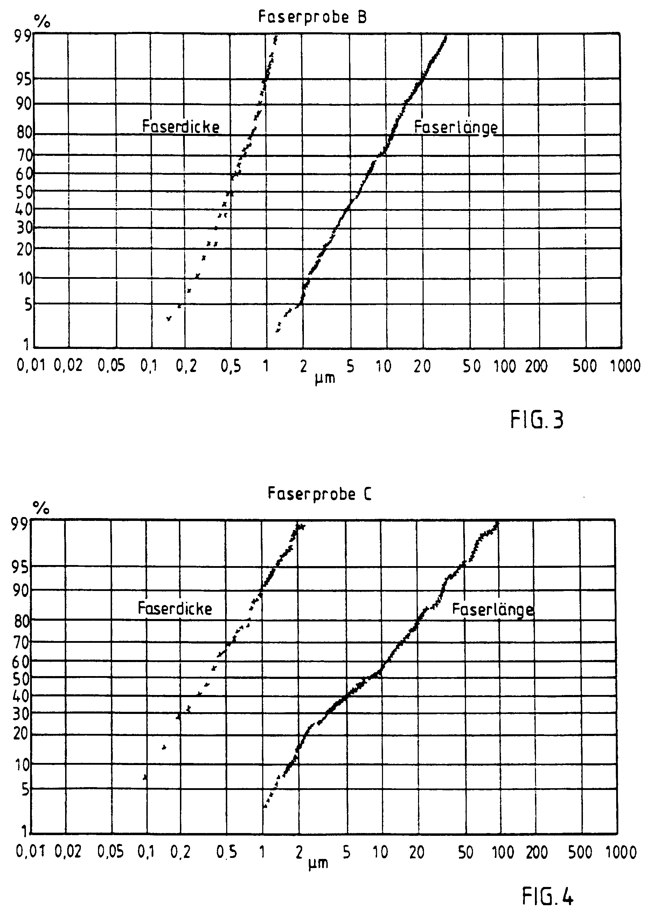

Die Einzelmeßwerte der Faserlänge und -dicke liegen bei logarithmischer Auftragung in guter Näherung auf einer Geraden (Fig. 2, 3); d.h. sie gehorchen einer Normalverteilung.

In der nachfolgenden Tabelle ist jeweils für eine bestimmte Faserklasse die berechnete Zahl der biologisch kritischen Fasern pro ng angegeben.

| Probe | Def. 1 | Def. 2 | Def. 3 |
|---|---|---|---|
| | L >3 µm | L >3 µm | L >3 µm |
| | D <3 µm | D <1 µm | D <1 µm |
| | L/D >3 | L/D >3 | L/D >5 |
| A | 7,316 | 0,623 | 0,534 |
| B | 85,119 | 79,457 | 75,834 |

Die Faserproben A und B wurden jeweils bei 35 weiblichen Wistarratten mit 2 mg Fasermaterial suspendiert in 0,4 ml physiologischer Kochsalzlosung intratracheal instilliert. Nach 1 Tag, 1, 6, 12 und 24 Monaten wurden dann jeweils 6 Tiere pro Fasergruppe seziert, die Lungen herauspräpariert, getrocknet und bei 300°C plasmaverascht. Zur Abtrennung der Fasern von Salzbestandteilen wurde jeweils ein Teil der Lungenasche in 1N Salzsäure suspendiert und einige Minuten mit Ultraschall behandelt. Die Fasern wurden anschließend auf einen Filter isoliert. Die so präparierten Fasern wurden ebenso wie die Ausgangsfaserproben im REM untersucht.

Zusätzlich wurde mit Hilfe der Zahl der ausgemessenen Fasern und ausgewerteten Bilder sowie der Filtereinwaage die Faserzahl pro Lunge rechnerisch ermittelt. Die Fasermasse wurde dabei aus dem mittleren Faservolumen und der Dichte bestimmt. Die Auswertung ist in der nachfolgenden Tabelle dargestellt.

| Probe | Zeit [mon] | Fasern [10⁶/Lunge] | | Fasern [L >5 µm] [10⁶/Lunge] | | Fasermasse [µg] | |
|---|---|---|---|---|---|---|---|
| | | Mittel | Std. | Mittel | Std. | Mittel | Std. |
| A | 1 T | 8,530 | 1,381 | 6,217 | 0,586 | 793,92 | 168,60 |
| | 1 | 11,843 | 1,754 | 8,723 | 1,291 | 351,49 | 70,43 |
| | 6 | 3,015 | 0,316 | 1,798 | 0,309 | 66,12 | 28,22 |
| | 12 | 0,843 | 0,169 | 0,660 | 0,132 | 19,79 | 5,80 |
| | 24 | 0,077 | 0,002 | 0,064 | 0,009 | 5,64 | 2,20 |
| B | 1 Tag | 110,380 | 15,188 | 44,141 | 13,317 | 649,59 | 166,41 |
| | 1 | 59,758 | 5,774 | 27,003 | 5,729 | 265,84 | 24,29 |
| | 6 | 4,175 | 1,626 | 1,551 | 0,781 | 17,69 | 7,42 |
| | 12 | 0,120 | 0,037 | 0,065 | 0,010 | 5,09 | 3,07 |
| | 24 | 0,022 | 0,007 | 0,010 | 0,004 | 0,17 | 0,18 |

Aus diesen Untersuchungen wird klar, daß sowohl die Anzahl als auch die Masse der Fasern rasch abgebaut wird (gute Lungenclearance). Mit einem rechnerischen Ansatz einer Kinetik 1. Ordnung ergeben sich für die Lungenclearance sogenannte Halbwertszeiten, innerhalb der entweder die Zahl oder die Masse der Fasern auf die Hälfte des Ursprungswertes abgefallen ist. Die so berechneten Halbwertszeiten in Tagen sind in der nachfolgenden Tabelle zusammengestellt, wobei rechts und links vom Mittelwert jeweils 95 %ige statistische Vertrauenswerte stehen, "Statistischer Vertrauenswert von 95 %" bedeutet dabei, daß die jeweils rechts oder links vom Mittelwert stehende Halbwertszeit mit einer Wahrscheinlichkeit von 5 % auftritt.

| Probe | Faserzahl > Mittel < | | | Faserzahl [L >5 µm] > Mittel < | | | Fasermasse > Mittel < | | |
|---|---|---|---|---|---|---|---|---|---|
| A | 96 | 102 | 109 | 98 | 106 | 115 | 88 | 106 | 133 |
| B | 35 | 37 | 39 | 36 | 39 | 42 | 42 | 51 | 65 |

Ein Vergleich mit den nach dem Stand der Technik in [9] angegebenen Halbwertszeiten für KMF anderer chemischer Zusammensetzungen ist in folgender Tabelle zusammengestellt. Da mit abnehmendem Faserdurchmesser theoretisch die Halbwertszeit geringer werden muß, ist ein absoluter Vergleich der Lungenclearance nur mit Berücksichtigung des medianen Faserdurchmessers möglich. Dies ist durch den in der Tabelle angegebenen Wert - gemessene Halbwertszeit bezogen auf Medianwert des Durchmessers - erreicht. Der große Unterschied der Faserproben A und B zu den in [9] dargestellten werten ist ersichtlich.

| Faser | d_{F50} µm | Halbwertszeit nach Faserzahl (L >5 µm) [Tage] | Halbwertszeit/d_{F50} (L >5 µm) [Tage/µm] |
|---|---|---|---|
| A | 1,55 | 106 | 68 |
| B | 0,6 | 39 | 65 |
| Crokydolit | 0,15 | 1000 | 6667 |

| Glasfaser | | | |
|---|---|---|---|
| 104/E | 0,1 | 55 | 550 |
| 104/475 | 0,18 | 3500 | 19444 |
| 104/753 | 0,20 | 165 | 825 |
| Glaswolle | 0,91 | 272 | 299 |
| Steinwolle | 1,8 | 283 | 157 |
| Keramikwolle | 0,8 | 780 | 975 |

Aus [4] und [10] können die tatsächlich induzierten Tumorraten nach intraperitonealer Injektion entnommen werden.

| Faser | Tumorrate [%] | d_{F50} |
|---|---|---|
| Crokidolite | 56,3 - 87,5 | 0,2 |
| Chrysotil | 33 - 83 | 0,03 - 0,11 |
| Glasfaser104/475 | 64 | 0,15 |
| Basaltfaser | 57 | 1,1 |
| Keramikfaser | 70 | 0,89 |

Die Ergebnisse zeigen eindeutig, daß künstliche und natürliche Mineralfasern mit einer hohen Halbwertszeit der Lungenclearance bei hoher Faserfeinheit (hoher Wert von Halbwertszeit/d_{F50}) ein hohes kanzerogenes Potential besitzen. Das kanzerogene Potential ist dabei umso größer, je größer die relative, auf den Durchmesser bezogene, Halbwertszeit ist.

### Beispiel 2

Eine Faserprobe C, deren Durchmesserverteilung in Fig. 1 dargestellt ist, wurde ebenfalls nach dem Blasdüsenverfahren gemäß EP-A-279 286 mit folgender chemischer Zusammensetzung hergestellt:
SiO₂ = 58,5 %; B₂O₃ = 11,0 %, Na₂O = 9,8 %; Al₂O₃ = 5,8 %; Eisenoxide = 0,1 %; BaO = 5,0 %; ZnO = 3,9 %; K₂O = 2,90 %; CaO = 3,0 %.

Nach dem Mahlen ergaben sich analog zu Beispiel 1 folgende Fasermeßwerte:

| Probe | Fäserlänge [µm] | | | Faserdurchmesser [µm] | | | Faseranteil [%] L >5 µm D <3 µm | Volumen [µm³ ] | Fasern/ng L >5 µm D <3 µm |
|---|---|---|---|---|---|---|---|---|---|
| | 10 %< | 50 %< | 90 %< | 10 %< | 50 %< | 90 %< | | | |
| C | 1,3 | 5,6 | 31,5 | 0,15 | 0,39 | 0,98 | 52,5 | 21 | 9,4·10⁶ |

In der nachfolgenden Tabelle ist jeweils für eine bestimmte Faserklasse die berechnete Zahl der biologisch kritischen Fasern angegeben:

| Probe | Def. 1 | Def. 2 | Def. 3 |
|---|---|---|---|
| | L >3 µm D <3 µm L/D >3 | L >3 µm D <1 µm L/D >3 | L >3 µm D <1 µm L/D >5 |
| C | 11,475 | 9,734 | 9,734 |

Anschließend wurden diese Fasern wiederum in 35 Wistarratten intratracheal instilliert. Ebenso wie in Beispiel 1 wurden dann die Faserproben nach 1 Tag, 1, 6, 12 und 24 Monaten isoliert und bezüglich der Lungenclearance untersucht. Die Untersuchungsergebnisse sind in der folgenden Tabelle dargestellt.

| Probe | Zeit [Mon] | Fasern [10⁶/Lunge] | | Fasern [L >5 µm] [10⁶/Lunge] | | Fasermasse [µg] | |
|---|---|---|---|---|---|---|---|
| | | Mittel | Std. | Mittel | Std. | Mittel | Std. |
| C | 1 Tag | 51,130 | 15,561 | 32,091 | 10,742 | 994,50 | 195,88 |
| | 1 | 62,712 | 16,027 | 38,820 | 13,177 | 1039,20 | 409,17 |
| | 6 | 21,698 | 4,264 | 11,778 | 3,920 | 340,88 | 139,14 |
| | 12 | 10,474 | 1,208 | 7,231 | 0,522 | 215,80 | 3,97 |
| | 24 | 7,077 | 2,181 | 5,011 | 1,737 | 200,30 | 29,89 |

Im Vergleich zu Beispiel 1 werden die Fasern in Anzahl und Masse deutlich langsamer abgebaut. So ist insbesondere die Abnahme zwischen 12 und 24 Monaten sehr gering, was wohl auf eine hohe Beständigkeit dieser Fasern aufgrund ihrer chemischen Zusammensetzung zurückzuführen ist.

Die aus den Daten der vorhergehenden Tabelle berechneten Halbwertszeiten ergeben sich wie folgt:

| Probe | Faserzahl > Mittel < | | | Faserzahl µm] > Mittel | | [L >5 < | Fasermasse > Mittel < | | |
|---|---|---|---|---|---|---|---|---|---|
| C | 184 | 233 | 317 | 190 | 254 | 380 | 213 | 306 | 542 |

### Messung der Tumorraten

Bei den Fasern gemäß den Ausführungsbeispielen 1 und 2 wurden die Tumorraten systematisch untersucht. Zu diesem Zweck wurden die in den Ausführungsbeispielen 1 und 2 beschriebenen Faserproben A, B und C intraperitoneal in Wistarratten injiziert und die Tumorrate nach einer Zeit von 2 Jahren untersucht. Die Probenvorbereitung erfolgte durch Mahlen der Ausgangsfaserproben mittels Messer- und Kugelmühle. Die Größenverteilungen der so gewonnenen Faserproben sind aus der nachfolgenden Tabelle ersichtlich:

| Probe | Faserlänge [µm] | | | Faserdurchmesser [µm] | | |
|---|---|---|---|---|---|---|
| | 10 %< | 50 %< | 90 %< | 10 %< | 50 %< | 90 %< |
| A1 | 4,1 | 7,7 | 18,0 | 0,88 | 1,67 | 2,57 |
| A2 | " | " | " | " | " | " |
| B1 | 1,4 | 4,4 | 14,1 | 0,25 | 0,47 | 0,90 |
| B2 | " | " | " | " | " | " |
| C1 | 1,2 | 5,5 | 32,1 | 0,14 | 0,38 | 0,99 |
| C2 | " | " | " | " | " | " |

Die Faserproben wurden in Form einer Suspension in 2 ml NaCl-Lösung in verschiedenen Dosen intraperitoneal injiziert, wobei eine möglichst hohe Anzahl an kritischen Fasern mit einer Länge >5 µm angestrebt wurde, um die tumorerzeugende Wirkung zu verstärken. Die nach einer Versuchsdauer von 2 Jahren gemessenen Untersuchungsergebnisse sind in der folgenden Tabelle zusammengestellt:

| Probe | Dosis intraperitoneal | | Anzahl Tiere | Tiere mit Tumoren | Tumorrate [%] |
|---|---|---|---|---|---|
| | [mg] | Faserzahl [L >5 µm] * 10⁶ | | | |
| A1 | 1 x 20 | 144 | 48 | 0 | 0 |
| A2 | 3 x 20 | 432 | 48 | 0 | 0 |
| B1 | 1 x 6,7 | 395 | 48 | 0 | 0 |
| B2 | 1 x 20 | 1180 | 47 | 0 | 0 |
| C1 | 1 x 6,7 | 66 | 48 | 14 | 29,2 |
| C2 | 1 x 20 | 196 | 48 | 25 | 52,1 |

Trotz der relativ geringen Zahl an kritischen Fasern (L >5 µm) zeigt sich, daß die Faser C stark kanzerogen ist, während bei den Proben A, B keine Kanzerogenität festgestellt werden konnte. Es ergibt sich, daß die in den Beispielen 1 und 2 dargestellten Ergebnisse für die Lungenclearance mit den Kanzerogenitätsergebnissen eindeutig korrelieren.

### Messung der Säurebeständigkeit

Zur Untersuchung der chemischen Beständigkeit wurden Glasfasern der Zusammensetzung nach Beispiel 1 mit einem mittleren, elektronenmikroskopisch (REM-Messung) bestimmten Faserdurchmesser von 0,5 µm in 37 %iger Schwefelsäure bei Raumtemperatur bzw. 60°C nach folgender Vorschrift behandelt:
Zunächst wurden die zu untersuchenden Glasfasern in einem Umluft-Trockenschrank bei 110°C bis zur Gewichtskonstanz getrocknet. Nach Abkühlung und Konditionierung in einem Exsikkator wurden 2,0 g Glasfasern exakt abgewogen, in einen 250 ml Teflon-Erlenmeyerkolben gegeben und anschließend mit der 100-fachen Gewichtsmenge 37 %iger Schwefelsäure versetzt. Sodann wurden die zu untersuchenden Proben auf die jeweilige Prüftemperatur aufgeheizt und während der Behandlungsdauer auf dieser Temperatur mit einer Abweichung von ± 1°C gehalten.

Nach dieser Aufheizung wurde die Glasfaser der Schwefelsäurelösung entnommen, in eine vorher exakt ausgewogene Glasfritte der Porosität Nr. 4 gegeben und dann mit 5 l vollentsalztem Wasser bis zur Neutralität des ablaufenden Filtrats gespült. Anschließend wurde die Glasfaserprobe 4 Stunden bei 110°C getrocknet und dann nach Abkühlung und Konditionierung im Exsikkator ausgewogen. In den nachstehenden Tabellen ist der jeweilige Gewichtsverlust in Gewichtsprozent angegeben.
a) Behandlung in 37 %iger Schwefelsäure bei Raumtemperatur Gewichtsverlust nach einer Verweildauer in Stunden:

| Verweildauer [h] | Gewichtsverlust [%] |
|---|---|
| 1 | 3,9 |
| 2 | 4,0 |
| 4 | 7,1 |
| 8 | 11,8 |
| 16 | 16,0 |
| 24 | 17,1 |
| 48 | 19,1 |
| 72 | 17,8 |

b) Behandlung in 37 %iger H₂SO₄ bei 60°C

| Verweildauer [h] | Gewichtsverlust [%] |
|---|---|
| 1 | 20,8 |
| 2 | 20,4 |
| 4 | 22,1 |
| 8 | 22,8 |
| 16 | 24,1 |
| 24 | 26,4 |
| 48 | 22,7 |
| 72 | 25,8 |

### Messung der Laugenbeständigkeit

Glasfasern der Zusammensetzung nach Beispiel 1 mit einem mittleren, elektronenmikroskopisch bestimmten Faserdurchmesser von 2,0 µm werden analog dem bei der Prüfung auf Saurebeständigkeit beschriebenen Verfahren in einer wäßrigen 0,1 N NaOH-Lösung bei Raumtemperatur bzw. 60°C behandelt. Der jeweilige Gewichtsverlust nach unterschiedlichen Behandlungszeiten ist in den nachstehenden Tabellen angegeben:
a) Behandlung in 0,1 N NaOH-Lösung bei Raumtemperatur

| Verweildauer [h] | Gewichtsverlust [%] |
|---|---|
| 1 | 2,1 |
| 2 | 2,3 |
| 4 | 3,1 |
| 8 | 3,0 |
| 16 | 4,7 |
| 24 | 5,9 |
| 48 | 8,8 |
| 72 | 11,1 |

b) Behandlung in 0,1 N NaOH-Lösung bei 60°C

| Verweildauer [h] | Gewichtsverlust [%] |
|---|---|
| 1 | 5,6 |
| 2 | 13,4 |
| 4 | 17,1 |
| 8 | 26,8 |
| 16 | 38,2 |
| 24 | 34,5 |
| 48 | 36,9 |
| 72 | 41,1 |

### Literaturverzeichnis

[1] Poeschel, E. und A. Köhling: Asbestersatzstoffkatalog Bd. 1, Faser- und Füllstoffe, Berlin: Bundesumweltamt 1985
[2] WHO, International Programme of chemical safety draft environmental health criteria for man made mineral fibers, Nov. 1986
[3] International Symposium of Man-made Mineral Fibres in the Working Environment WHO, Okt. 1986
[4] Pott, F.: Die krebserzeugende Wirkung anorganischer Fasern im Tierexperiment - Daten und Bewertung; Umwelthygiene, Bd. 20, Institut für Umwelthygiene Düsseldorf, Jahresbericht 1987/88
[5] WHO, Asbestos and other natural mineral fibres; Environmental health criteria 53 - Geneva: WHO 1986
(6) IARC-Monographs: Man made mineral fibres and radon, Vol. 43 - Lyon, International Agency of Research on Cancer 1988
[7] Leineweber, J.P.: Solubility of fibres in vitro und in vivo; Biological effects of man-made mineral fibres, Copenhagen, 1982
[8] Davis, J.M.G.: A review of experimental evidence for the carcinogenicity of man-made vitreous fibres, Scand. J. Work Environ. Health 12, Suppl. 1 (1986) 12-17
[9] Bellmann, B., H. Muhle et al.: Persistance of man made mineral fibres and Asbestos in rat lungs Am. Occup. Hyg. Vol. 31, 1987
[10] Pott, F. et al.: Carcinogenicity studies on fibres, metal compounds and some other dusts in rats Exp. Pathol. 32, 129-152, 1987

## Patentansprüche

1. Verwendung der Glasfasern mit der folgenden in Mol-% angegebenen Glaszusammensetzung:
| | | | |
|---|---|---|---|
| SiO₂ | 55-70 | vorzugsweise | 58-65 |
| B₂O₃ | 0-5 | vorzugsweise | 0-4 |
| Al₂O₃ | 0-3 | vorzugsweise | 0-1 |
| TiO₂ | 0-6 | vorzugsweise | 0-3 |
| Eisenoxide | 0-2 | vorzugsweise | 0-1 |
| MgO | | | 1-4 |
| CaO | 8-24 | vorzugsweise | 12-20 |
| Na₂O | 10-20 | vorzugsweise | 12-18 |
| K₂O | 0-5 | vorzugsweise | 0,2-3 |
| Fluorid | 0-2 | vorzugsweise | 0-1 |
und die einen Durchmesser von < 8 µm besitzen, wobei mehr als 10% der Glasfasern einen Durchmesser von < 3 µm aufweisen, als Glasfasern, die kein kanzerogenes Potential zeigen, wobei die Anteile von TiO₂, BaO, ZnO, SrO, ZrO₂ < 1 Mol-%, betragen.

2. Verwendung der Glasfasern nach Anspruch 1 und mit einem mittleren Durchmesser von < 2 µm, wobei folgende zusätzliche Bedingungen für die molaren Anteile von Al₂O₃, B₂O₃, CaO und Na₂O gelten:
| | |
|---|---|
| Al₂O₃ | < 1 Mol-% |
| B₂O₃ | < 4 Mol-% |
| CaO | > 11 Mol-% |
| Na₂O | > 4 Mol-% |

3. Verwendung der Glasfasern nach Anspruch 1-2 und mit einer Länge < 200 µm.

## Claims

1. Use of glass fibres with the following glass composition stated in mol.%:
| | | | |
|---|---|---|---|
| SiO₂ | 55 - 70 | preferably | 58 - 65 |
| B₂O₃ | 0 - 5 | preferably | 0 - 4 |
| Al₂O₃ | 0 - 3 | preferably | 0 - 1 |
| TiO₂ | 0 - 6 | preferably | 0 - 3 |
| Iron oxides | 0 - 2 | preferably | 0 - 1 |
| MgO | 1 - 4 | | |
| CaO | 8 - 24 | preferably | 12 - 20 |
| Na₂O | 10 - 20 | preferably | 12 - 18 |
| K₂O | 0 - 5 | preferably | 0.2 - 3 |
| Fluoride | 0 - 2 | preferably | 0 - 1 |
and which have a diameter of < 8 µm, wherein more than 10% of the glass fibres have a diameter of < 3 µm, as glass fibres which exhibit no carcinogenic potential, wherein the proportions of TiO₂, BaO, ZnO, SrO, ZrO₂ amount to < 1 mol.%.

2. Use of glass fibres according to claim 1 and with an average diameter of < 2 µm, wherein the following additional conditions apply to the molar proportions of Al₂O₃, B₂O₃, CaO and Na₂O:
| | |
|---|---|
| Al₂O₃ | < 1 mol.% |
| B₂O₃ | < 4 mol.% |
| CaO | > 11 mol.% |
| Na₂O | > 4 mol.%. |

3. Use of the glass fibres according to claims 1 - 2 and with a length of < 200 µm.

## Revendications

1. Utilisation des fibres de verre consistant en un verre à la composition suivante en mol%:
| | | | |
|---|---|---|---|
| SiO₂ | 55-70 | de préférence | 58-65 |
| B₂0₃ | 0-5 | de préférence | 0-4 |
| Al₂0₃ | 0-3 | de préférence | 0-1 |
| TiO₂ | 0-6 | de préférence | 0-3 |
| Oxydes de fer | 0-2 | de préférence | 0-1 |
| MgO | | | 1-4 |
| CaO | 8-24 | de préférence | 12-20 |
| Na₂0 | 10-20 | de préférence | 12-18 |
| K₂0 | 0-5 | de préférence | 0,2-3 |
| Fluorure | 0-2 | de préférence | 0-1 |
et ayant un diamètre inférieur à 8,um, plus de 10 % des fibres de verte ayant un diamètre inférieur à 3,um, en, tant que fibres de verre dépourvues de propriétés cancérigènes, les proportions de TiO₂, BaO, ZnO, SrO, ZrO₂ étant < 1 mol%.

2. Utilisation des fibres de verte selon la revendication 1 à un diamètre moyen inférieur à 2 µm, avec les conditions supplémentaires suivantes concernant les proportions molaires d'Al₂0₃, de B₂0₃, de CaO et de Na₂0 :
| | |
|---|---|
| Al₂0₃ | < 1 mol% |
| B₂0₃ | < 4 mol% |
| CaO | > 11 mol% |
| Na₂0 | > 4 mol% |

3. Utilisation de fibres de verte selon les revendications 1 et 2, ayant une longueur inférieure à 200 µm.
